Europäisches Patentamt

European Patent Office

Office européen des brevets

(11) Numéro de publication : **0 102 856**
**B1**

(12) **FASCICULE DE BREVET EUROPÉEN**

(45) Date de publication du fascicule du brevet :
23.12.87

(21) Numéro de dépôt : 83401238.7

(22) Date de dépôt : 16.06.83

(51) Int. Cl.⁴ : **B 63 B 35/82**, B 60 P 3/10

(54) **Chariot de transport de planches à voile.**

(30) Priorité : 25.06.82 FR 8211784
05.11.82 FR 8219016

(43) Date de publication de la demande :
14.03.84 Bulletin 84/11

(45) Mention de la délivrance du brevet :
23.12.87 Bulletin 87/52

(84) Etats contractants désignés :
**AT BE CH DE FR GB IT LI LU NL SE**

(56) Documents cités :
**DE-A- 2 944 902**
**DE-A- 3 044 595**
**FR-A- 1 597 093**
**FR-A- 2 414 432**

(73) Titulaire : **Poulouin, Armand**
**2 chemin des Bruyères**
**Kerity F-22500 Paimpol (FR)**

(72) Inventeur : **Poulouin, Armand**
**2 chemin des Bruyères**
**Kerity F-22500 Paimpol (FR)**

(74) Mandataire : **Le Guen, Louis François**
**Cabinet Louis Le Guen 1, avenue Edouard VII B.P. 91**
**F-35802 Dinard Cedex (FR)**

Jouve. 18. rue St-Denis. 75001 Paris. France

## Description

La présente invention concerne les chariots destinés au transport des planches à voile.

Les dispositifs connus de ce genre sont généralement associés à un timon pour la traction du chariot. La présence de ce timon augmente le prix de revient du chariot et est peu pratique à l'usage, car encombrant et fastidieux à assembler. Cependant, son rôle est utile en tant qu'instrument de préhension et le timon permet d'éviter, lorsque l'on pose sur le chariot un flotteur de planche à voile, que ce dernier ne touche le sol et ne s'abîme.

Le dispositif, suivant l'invention, permet de conserver les avantages offerts par le timon en supprimant les inconvénients de sa présence, et d'obtenir un service d'usage optimum pour un encombrement minime.

Il existe déjà des dispositifs de transport de planche à voile dans lesquels le mât est utilisé comme timon. Un tel dispositif est décrit dans le document DE-A-2 944 902, où le mât est fixé par des sangles au flotteur de la planche à voile, ce dernier étant posé sur chant sur un chariot.

Dans un autre dispositif, décrit dans le document DE-A-3 044 595 et correspondant aux préambules de la revendication 1 et de la revendication 2, le flotteur de planche à voile est posé à plat sur le support d'un chariot et le mât, placé sous le flotteur, se fixe à ce dernier par des sangles.

Dans les deux cas, il n'est pas très pratique de positionner et de fixer le mât. De plus, le mât peut bouger par rapport au chariot, du fait qu'il n'est pas bloqué par rapport à ce dernier et il ne donne donc pas entière satisfaction en tant que timon.

Le chariot selon l'invention comporte les éléments de la revendication 1 et est constitué par un organe formé de deux parties distinctes et destiné à servir de support à un flotteur de planche à voile, cet organe étant associé par divers éléments structurels à deux roues de contact avec le sol et à un système d'accrochage rapide d'un mât de planche à voile composé d'une butée avant de mât située vers l'avant du chariot et d'une butée arrière de mât située vers l'arrière du chariot. Ces deux butées sont destinées à la fixation rapide d'un mât (avec éventuellement une voile enroulée autour) de planche à voile sur le chariot de façon à ce que, le mât étant fixé dans les butées, l'utilisateur puisse se servir du mât comme timon pour tracter le chariot par l'extrémité du mât située en avant du chariot. Les deux butées de mât sont disposées de façon à ce que la fixation d'un mât de planche à voile sur le chariot soit telle que la pose d'un flotteur de planche à voile sur l'organe prévu à cet effet situe ce flotteur au-dessus du mât préalablement assemblé au chariot par l'utilisateur, de manière à permettre la pose de ce flotteur sur le chariot sans que le flotteur ne touche le sol et ne s'abîme, les appuis au sol des deux parties assemblées se faisant par l'extrémité du mât située en avant du chariot et par les roues du chariot. L'organe protecteur est fixé sur l'extrémité du mât située en avant du chariot de manière à éviter toute détérioration de cette extrémité lors de l'appui au sol.

Lorsqu'un mât de planche à voile est fixé dans les butées de mât et que l'extrémité du mât située en avant du chariot repose au sol, ou encore que le mât est en position d'utilisation de traction du chariot, le dispositif est prévu de telle manière que la butée avant du mât bloque le mât latéralement et vers le haut, et que la butée arrière du mât bloque le mât latéralement et vers le bas, l'axe des roues étant en position suffisamment reculée pour établir un coincement par gravité du mât dans les butées et la pose d'un flotteur de planche à voile sur le chariot augmentant l'effort de coincement. Selon une disposition particulière, l'axe des roues est situé nettement en arrière de la butée de mât arrière. Chaque butée comporte une gorge recevant la section du mât, l'ouverture de la gorge permettant la mise en place du mât.

Selon une autre possibilité de l'invention comportant les éléments de la revendication 2, l'une quelconque des butées ne comporte pas nécessairement une gorge et établit un simple blocage vers le haut ou vers le bas, l'autre butée comportant une gorge assez longue pour établir un guidage latéral suffisamment efficace sur la longueur du mât.

Selon une autre possibilité, chaque gorge composant une butée offre des côtés arrondis destinés à épouser la forme de la section du mât.

Selon une autre possibilité, chaque gorge composant une butée offre des côtés inclinés en V de façon à assurer un blocage ponctuel du mât.

Selon une réalisation de l'invention, un dispositif structurel spécifique compose le chariot de façon à offrir une position de basculement arrière du chariot qui permette à l'utilisateur d'engager sans entraves un mât de planche à voile dans les butées de mât, le redressement du chariot en position d'utilisation bloquant le mât dans les butées. D'autre part, cette réalisation structurelle permet à l'utilisateur un rangement facilité à la fois du mât et du wishbone sous le flotteur de la planche. De plus, suivant cette réalisation structurelle, la partie avant du wishbone forme organe de support du flotteur à l'avant du chariot et constitue, avec l'organe du chariot formant support du flotteur, une surface de pose importante pour le flotteur, ce qui est particulièrement pratique pour la pose du flotteur sur le chariot par l'utilisateur. D'autre part, selon cette réalisation structurelle, le fait de pouvoir ranger facilement les accessoires encombrants (mât et wishbone) sous le flotteur de la planche résout un problème posé par les chariots actuellement connus selon lesquels tout ou partie du gréement est fixé au-dessus du flotteur par des sandows ou sangles, ce qui constitue un arrimage sommaire et d'autre part fastidieux pour l'utilisateur. Selon cette réalisation structurelle, toutes les parties encombrantes (mât, wishbone et flotteur) sont assemblées de manière rapide, pratique et rigide, un ou plusieurs sandows ou sangles venant ceinturer uniquement le flotteur en le pressant contre les autres éléments (mât et wishbone).

Selon un exemple de réalisation de l'invention, le chariot est composé par deux longerons parallèles entre eux destinés au support d'un flotteur de planche à voile, ces deux longerons étant reliés entre eux par une ou plusieurs traverses avant et par une ou plusieurs traverses arrière. Les traverses sont parallèles entre elles. Chaque traverse avant comporte une butée de mât avant, chaque traverse arrière comporte une butée de mât arrière. Chaque traverse avant ou arrière comporte en chaque extrémité une partie en décrochement permettant d'une part la pose d'un flotteur de planche à voile sur les longerons sans que ces flotteurs ne touchent les butées, et permettant d'autre part la pose d'un wishbone entre les longerons sans que la partie du wishbone située entre les longerons ne touche le flotteur lors de sa pose sur le chariot. Une extrémité de chaque traverse joint un longeron et son autre extrémité joint l'autre longeron. Chaque longeron est relié à un organe de suspension établissant une liaison entre les longerons et l'axe des roues.

Dans une variante, la liaison des longerons avec l'organe de suspension est conçue de manière à rendre le chariot pliable par l'utilisation de divers dispositifs bien connus à ce jour et ne faisant pas l'objet de la présente invention.

Dans une autre variante, une partie de chaque longeron est laissée dépassante de son point de liaison avec l'organe de suspension vers l'arrière du chariot de façon à ce que l'extrémité de chaque partie dépassante serve de butée de sol pour le basculement arrière du chariot, celui-ci prenant alors appui au sol par ses roues et les extrémités arrière des longerons de façon à permettre un engagement aisé d'un mât de planche à voile entre les longerons par l'utilisateur.

Selon une autre réalisation de l'invention, le dispositif structurel est composé d'un organe de forme appropriée destiné à servir de support à un flotteur de planche à voile et composé d'une partie située à l'avant du chariot et d'une partie située à l'arrière du chariot. Cette dernière partie comporte en son milieu une butée arrière de mât et est reliée à l'axe des roues par un organe de suspension pour former la partie arrière du chariot. Cette partie arrière est reliée par deux longerons situés de part et d'autre de la butée arrière de mât et qui joignent la butée avant de mât ainsi que la partie avant de l'organe destiné à servir de support à un flotteur de planche à voile. L'engagement facile d'un mât de planche à voile par l'utilisateur entre les longerons se fait selon une position de basculement arrière du chariot.

Selon une autre réalisation de l'invention, la partie arrière du chariot est reliée par un unique longeron situé d'un côté ou de l'autre de la butée arrière et qui joint la butée avant de mât ainsi que la partie avant de l'organe destinée à servir de support à un flotteur de planche à voile. L'engagement facile d'un mât de planche à voile par l'utilisateur dans les butées de mât se fait par un simple levage de la butée avant de mât, un espace étant libéré latéralement d'un côté de chaque butée de mât.

Selon les deux dernières réalisations de l'invention, il est possible de concevoir la liaison du ou des longerons avec la partie arrière du chariot de manière à rendre celui-ci pliable par l'utilisation de systèmes bien connus de nos jours et ne faisant pas l'objet de la présente invention.

L'organe protecteur est, de préférence, réalisé sous la forme d'un anneau ouvert comportant une partie concave ayant une forme sensiblement circulaire destinée à épouser la forme de la section d'un mât de planche à voile. Cette partie concave est prolongée symétriquement jusqu'à deux extrémités qui délimitent entre elles un espace d'ouverture.

L'organe ainsi constitué est, de préférence, fabriqué en matière élastique (en matière plastique par exemple) de manière à permettre l'écartement des deux extrémités pour la fixation par pincement de cet organe protecteur à une extrémité d'un mât de planche à voile.

L'anneau ouvert est réalisé avec une épaisseur suffisante de manière à ce qu'une partie de la périphérie extérieure de l'anneau vienne en butée sur le sol lorsque l'anneau est fixé à une extrémité d'un mât de planche à voile et que le chariot est fixé sur la longueur de ce mât, les trois parties ainsi assemblées reposant au sol par l'intermédiaire des deux roues du chariot et de l'anneau fixé à une extrémité du mât.

La forme spécifique de l'anneau a pour autre avantage de permettre la fixation de l'anneau en un endroit du chariot de manière à offrir à l'utilisateur du chariot un usage rationnel évitant la perte de l'anneau.

Cette fixation est rendue possible par le fait qu'une section d'un élément constitutif du chariot a une dimension supérieure à celle de l'ouverture existante entre les deux extrémités de l'anneau de manière à ce que, cette section étant passée à l'intérieur de l'anneau, celui-ci ne puisse se détacher librement.

Dans les dessins joints :

la Fig. 1 est une vue générale en perspective d'un premier exemple de réalisation d'un chariot, suivant l'invention,

la Fig. 2 est une vue en perspective d'une variante du chariot de la Fig. 1,

les Figs. 3 et 4 sont des vues en perspective d'un troisième et quatrième exemple de réalisation du chariot selon l'invention. La Fig. 4 montre plus particulièrement une variante du chariot de la Fig. 3,

la Fig. 5 est une vue en perspective du chariot de la Fig. 3 sur lequel on a placé le mât et le wishbone,

la Fig. 6 est une vue en perspective d'un organe protecteur, et

la Fig. 7 est une vue en élévation de l'organe protecteur de la Fig. 6.

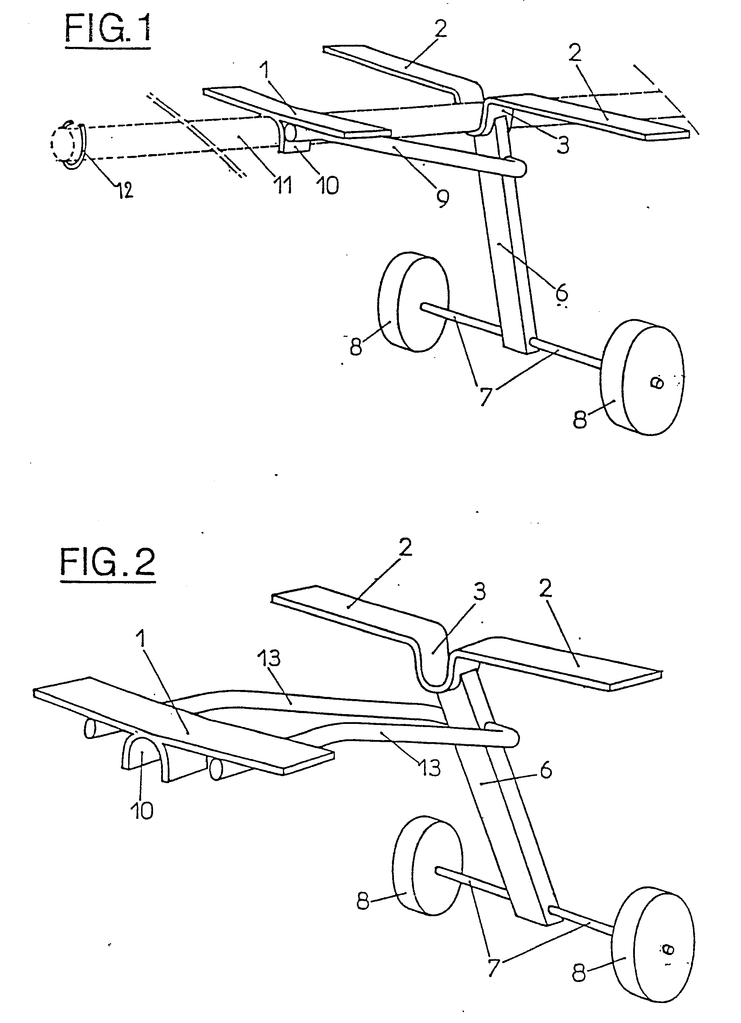

Le dispositif, tel qu'il est représenté à la Fig. 1, comporte un chariot destiné à servir de support au flotteur de la planche à voile. Ce chariot comporte un support avant 1 et un support arrière 2 ayant en son milieu une butée arrière de mât 3. Le support arrière 2 est relié à un organe de suspension 6, lui-même relié à un essieu 7 des roues 8 pour former la partie arrière du chariot. La partie arrière est reliée par un longeron 9 à une butée avant de mât 10 et au support avant 1. Le chariot est accroché sur la longueur d'un mât 11 par l'intermédiaire des deux butées de mât 3 et 10. Un organe protecteur 12 est fixé à l'extrémité du mât 11 située en avant du chariot.

En pratique, le support avant 1 est une plaque transversale rectangulaire. Sous sa face inférieure et dans sa partie médiane est fixée une butée 10. La butée 10 à la forme d'une gorge longitudinale ouverte vers le bas. Son diamètre intérieur est légèrement supérieur à celui du mât de façon à le recevoir avec éventuellement la voile enroulée autour. Le support arrière 2 est également une plaque rectangulaire transversale, mais de longueur plus grande que celle du support 1. La plaque 2 a été déformée en sa partie médiane de façon à former une gorge 3 longitudinale et ouverte vers le haut. De même que pour la gorge 10, et pour la même raison, le diamètre intérieur de la gorge 3 est légèrement supérieur à celui du mât. Les positions des gorges 3 et 10 sont telles que le mât est au-dessous du plan formé par les faces supérieures des supports 1 et 2, ce plan étant horizontal quand le mât, en place sur le chariot, est horizontal. Le flotteur de la planche à voile peut donc reposer sur les supports 1 et 2, sans contact avec le mât.

Le support arrière 2 est fixé par la face inférieure de la gorge 3 à un organe de suspension 6, lui-même relié à l'essieu 7 des roues 8. L'organe de suspension 6 a la forme d'une barre qui fait avec la partie avant du mât positionné sur le chariot un angle obtus, de telle façon que l'essieu 7 des roues 8 se trouve à l'arrière du support arrière 2 quand le mât est horizontal. La partie arrière du chariot comportant le support 2, la gorge 3, l'organe de suspension 6, l'essieu 7 et les roues 8, est reliée à la partie avant du chariot comportant le support 1 et la gorge 10 par un longeron 9 de forme cylindrique. A son extrémité adjacente à l'organe de suspension 6, le longeron 9 est coudé. Il est fixé par sa section au côté de l'organe de suspension 6, un peu au-dessous de la gorge 3. Son autre extrémité est fixée sur la face inférieure du support 1 ou sur la face supérieure de la gorge 10.

Le chariot, tel qu'il est représenté à la Fig. 2, est une variante du chariot montré à la Fig. 1. A la Fig. 2, on retrouve une même combinaison structurelle des mêmes éléments précédemment décrits à la différence que deux longerons 13, au lieu d'un, établissent la liaison de la partie arrière du chariot comportant le support arrière 2, la gorge 3, l'organe de suspension 6, l'essieu 7 et les roues 8, avec la partie avant comportant la butée avant de mât 10 et le support avant 1.

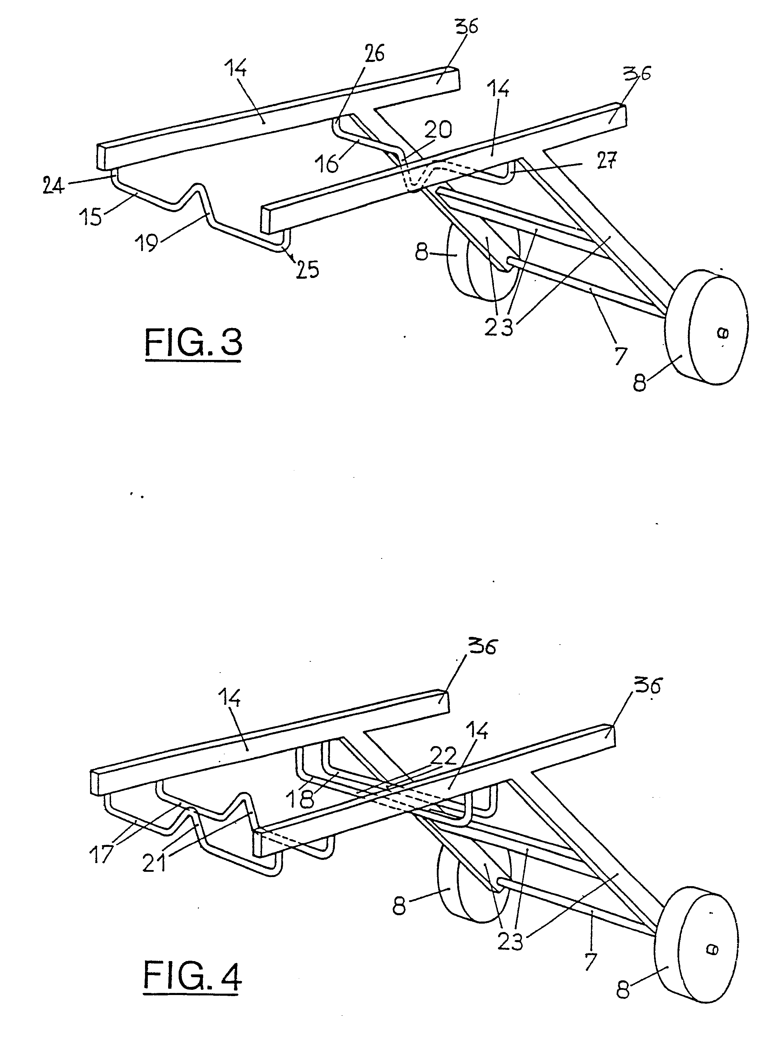

Les Fig. 3 et 4 représentent d'autres exemples de réalisation du chariot. Dans les Figs. 3 et 4, le chariot comporte deux longerons 14 parallèles entre eux reliés par des traverses avant et arrière 15 et 16 à la Fig. 3 ou 17 et 18 à la Fig. 4. Ces traverses comportent des butées de mât 19 et 20 à la Fig. 3 ou 21 et 22 à la Fig. 4, et des parties en décrochement 24, 25, 26 et 27, Fig. 3 et 4, permettant la pose du wishbone entre les longerons. Les deux longerons 14 sont reliés par un organe de suspension 23 à l'essieu 7 des roues 8. La Fig. 3 montre plus particulièrement une traverse avant 15 comportant une butée avant de mât 19 destinée à bloquer le mât latéralement et vers le haut et une traverse arrière 16 comportant une butée arrière de mât 20 destinée à bloquer le mât latéralement et vers le bas. La Fig. 4 montre plus particulièrement deux traverses avant 17 comportant une butée avant de mât 21 destinée à bloquer le mât vers le haut en établissant un guidage latéral efficace sur la longueur du mât, de sorte que la butée arrière de mât 22 associée aux traverses 18 est simplement destinée à bloquer le mât vers le bas.

En pratique, les traverses 15, 16, 17 et 18 sont des barres cylindriques qui ont une forme générale en U très évasée. Elles sont fixées à la face inférieure des longerons 14 par les extrémités des branches du U, 24, 25, 26 et 27. Les butées transversales du mât 19, 20 et 21 sont des V et des V inversés obtenus par coudage des traverses en leur partie médiane. Les longueurs des branches 24, 25, 26 et 27 des U des traverses avant et arrière sont telles que le mât en place se trouve dans un plan parallèle au plan défini par les faces supérieures des longerons 14 ; telles aussi que le flotteur, en place sur les longerons, ne touche pas la pointe de la butée avant. L'organe de suspension 23 a la forme d'un H dont chaque extrémité supérieure est reliée à un longeron 14. L'essieu 7 des roues 8 passe dans la partie inférieure des branches du H. Le plan du H fait un angle obtus avec la partie avant des longerons 14, de sorte que les roues soient en arrière par rapport à la traverse arrière du chariot, quand le mât, en place, est horizontal. A partir de l'organe de suspension 23, les longerons 14 se prolongent vers l'arrière formant ainsi des pattes 36 permettant de renverser le chariot en arrière, ce qui facilite le positionnement du mât dans les butées.

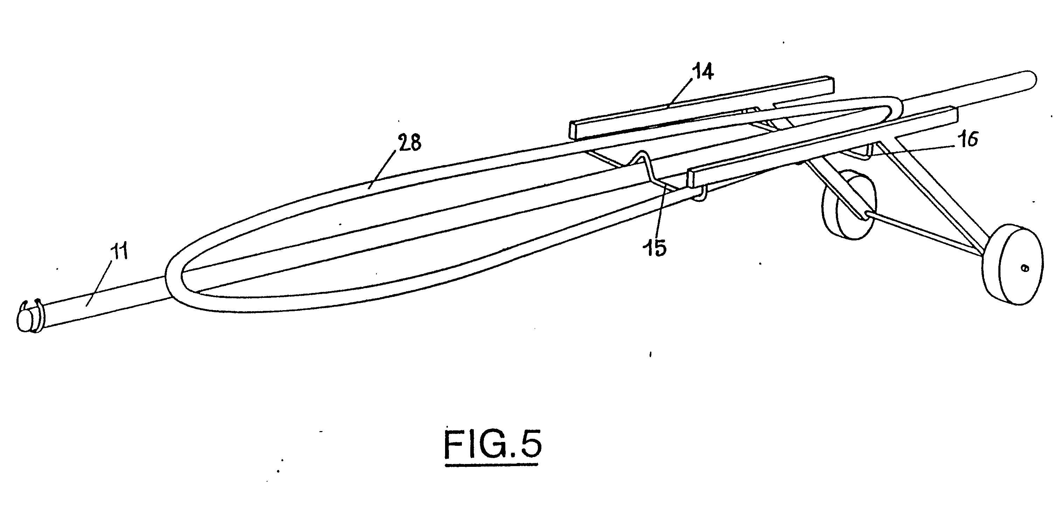

La Fig. 5 illustre le chariot de la Fig. 3 sur lequel on a placé le mât 11 et le wishbone 28. Le mât étant placé en premier, on met ensuite le wishbone entre les longerons. Il repose donc par ses deux branches sur la traverse arrière 16 et sur le mât par l'une de ses extrémités. La partie du wishbone 28 située entre les longerons ne vient pas en contact avec le flotteur de par la forme en U des traverses. Par contre, la partie avant du wishbone forme un appui supplémentaire pour le flotteur.

Le dispositif formant anneau, tel qu'il est représenté à la Fig. 5, est constitué par une partie concave 29 prolongée symétriquement jusqu'à deux extrémités 30 et 31 qui délimitent un espace d'ouverture 32. L'organe de protection est fixé par pincement à une extrémité 33 du mât 11.

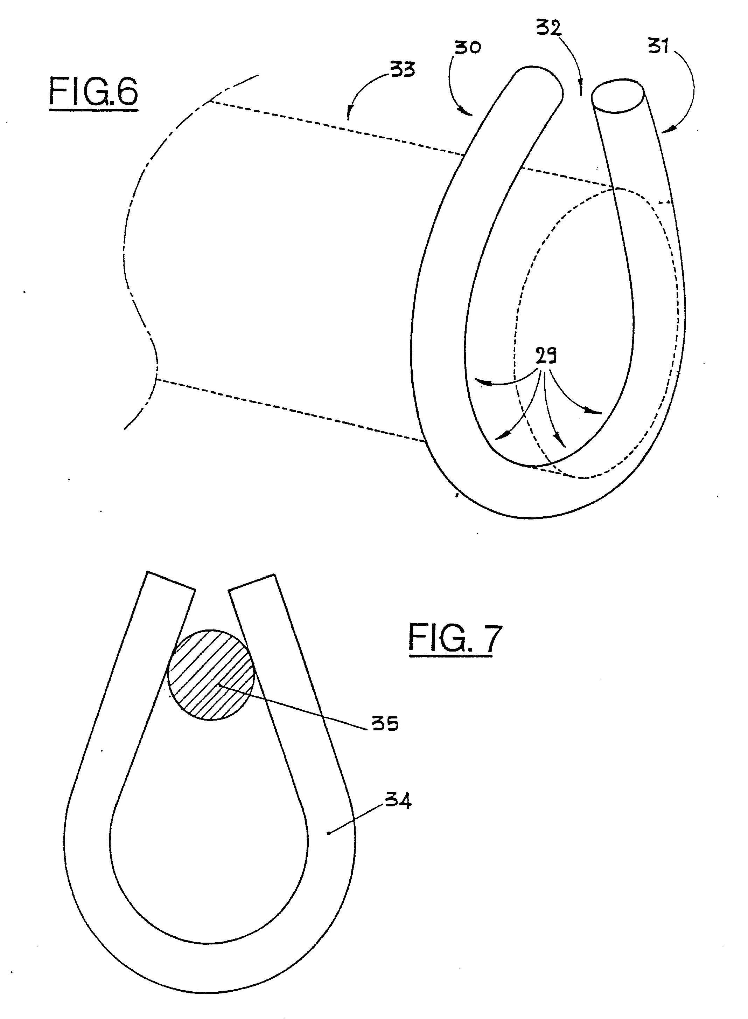

La Fig. 7 montre l'anneau ouvert 34 fixé sur une section 35 d'un élément constitutif du chariot.

Le dispositif peut être utilisé comme protection amovible d'une extrémité d'un mât de planche à voile lorsque celui-ci est utilisé en temps que timon associé à un chariot accroché sur la longueur de ce mât.

## Revendications

1. Chariot de transport de planches à voile comprenant un support de flotteur de planche à voile et un dispositif de positionnement et fixation rapides d'un mât de planche à voile qui positionne le mât de planche à voile accroché au chariot en dessous du flotteur de planche à voile posé sur le support, de sorte que le mât soit utilisable comme timon, caractérisé en ce que ledit dispositif se compose d'une butée de mât avant et d'une butée de mât arrière, la butée avant (10, 19) bloquant le mât latéralement et vers le haut et la butée arrière (3, 20) bloquant le mât latéralement et vers le bas, chaque butée étant composée d'une gorge recevant la section du mât.

2. Chariot de transport de planches à voile comprenant un support de flotteur de planche à voile et un dispositif de positionnement et fixation rapides d'un mât de planche à voile qui positionne le mât de planche à voile accroché au chariot en dessous du flotteur de planche à voile posé sur le support, de sorte que le mât soit utilisable comme timon, caractérisé en ce que ledit dispositif comporte une butée de mât qui bloque le mât vers le bas (ou vers le haut) et établit par l'intermédiaire d'une gorge allongée un guidage latéral suffisamment efficace sur la longueur du mât de manière à ce que l'autre butée établisse un simple blocage du mât vers le haut (ou vers le bas).

3. Chariot suivant la revendication 1 ou 2, caractérisé en ce que chaque gorge composant une butée offre des côtés inclinés en V de manière à assurer un blocage ponctuel du mât.

4. Chariot suivant l'une des revendications 1 à 3, caractérisé en ce que lorsqu'un mât de planche à voile est fixé au chariot et que l'extrémité du mât située en avant du chariot repose au sol ou est en position d'utilisation pour la traction du chariot, l'axe des roues est en position suffisamment reculée pour établir un coincement par gravité du mât dans les butées, la pose d'un flotteur de planche à voile sur le chariot augmentant l'effort de coincement.

5. Chariot suivant la revendication 4, caractérisé en ce que l'axe des roues est situé nettement en arrière de la butée arrière de mât.

6. Chariot suivant la revendication 1 ou 2, caractérisé en ce qu'il se compose de traverses avant et arrière (15, 16, 17, 18) formant chacune une butée de mât (19, 20, 21, 22) et reliées entre elles par deux longerons (14) formant le support de flotteur de planche à voile, l'ensemble des traverses et des longerons étant solidaire d'un organe de suspension (23) relié à l'axe (7) des roues (8).

7. Chariot suivant la revendication 6, caractérisé en ce qu'une partie des longerons est laissée dépassante à l'arrière du chariot pour servir de butée lors du basculement arrière du chariot.

8. Chariot suivant la revendication 6 ou 7, caractérisé en ce que les traverses (15, 16, 17, 18) ont une forme en U très ouvert, les branches extrêmes verticales des U étant fixées sous les longerons, lesdites branches ayant une longueur suffisante pour que le flotteur repose sur les longerons, tout en permettant de loger le wishbone sur les traverses.

9. Chariot suivant la revendication 1 ou 2, caractérisé en ce qu'il se compose d'un organe support d'un flotteur de planche à voile formé d'une partie avant (1) et d'une partie arrière (2), la partie arrière comportant en son milieu une butée arrière de mât (3) et joignant l'axe (7) des roues (8) par un organe de suspension (6) pour former la partie arrière du chariot qui est reliée par un longeron (9) situé d'un côté de la butée arrière de mât (3) à la partie avant (1) de l'organe support d'un flotteur de planche à voile et à la butée avant de mât (10).

10. Chariot suivant la revendication 10, caractérisé en ce que deux longerons (13) au lieu d'un établissent la liaison de la partie arrière du chariot avec la butée avant de mât (10) et la partie avant (1) de l'organe destiné à servir de support à un flotteur de planche à voile.

11. Dispositif de transport de planche à voile comprenant un chariot suivant l'une des revendications 1 à 10, caractérisé en ce qu'il comporte aussi un organe protecteur (12) d'une extrémité d'un mât de planche à voile permettant l'utilisation d'un mât de planche à voile comme timon en protégeant l'extrémité située en avant du chariot du contact avec le sol.

12. Dispositif suivant la revendication 11, caractérisé en ce que l'organe protecteur est un anneau ouvert, élastique et amovible, formant protection d'une extrémité d'un mât de planche à voile par l'intermédiaire de sa périphérie extérieure et pouvant être accrochée sur la longueur de ce mât, cet anneau étant constitué par une partie concave (29) prolongée symétriquement jusqu'à deux extrémités (30, 31) qui délimitent un espace d'ouverture (32) ayant une dimension plus petite que celle d'une section d'un élément constitutif de la partie formant chariot.

## Claims

1. A sail board carrier comprising a support for the sail board float and a fast coupling device for positioning and securing a sail board mast, the sail board mast becoming positioned and fastened to the carrier below the sail board float resting on the support, so as to have the mast usable as a beam, characterized in that said device is comprised of a front mast stop and a rear mast stop, the front mast stop (10, 19) blocking the mast sideward and upward and the rear mast stop (3, 20) blocking the mast sideward and downward, each stop being made of a groove for receiving a cross-section of the mast.

2. A sail board carrier comprising a support for the sail board float and a fast coupling device for positioning and securing a sail board mast, the sail board mast becoming positioned and fastened to the carrier below the sail board float resting on the support, so as to have the mast usable as a beam, characterized in that said device is comprised of a mast stop which blocks the mast downward (or upward) and provides, through an elongated groove, a lengthwise lateral guiding in the direction of the mast so efficient that the other stop has just to block the mast upward (or downward).

3. A sail board carrier according to claim 1 or 2, characterized in that each groove forming a stop is V-shaped so as to provide a point-clamping of the mast.

4. A sail board carrier according anyone of claims 1-3, characterized in that once a sail board mast has been secured to the carrier with its front end resting on the ground or in use position for trailing the carrier, the axle of the wheels is located backward enough to jam by gravity the mast between the said stops, the setting of the sail board float on the carrier increasing the jamming action.

5. A sail board carrier according to claim 4, characterized in that the axle of the wheels is located substantially behind the rear mast stop.

6. A sail board carrier according to claim 1 or 2, characterized in that it is comprised of front and rear cross-members (15, 16, 17, 18) each forming a mast stop (19, 20, 21, 22) and being interconnected by two side-members (14) constituting the sail board float support, the assembly of cross-members and side-members being integral with a suspension member (23) coupled to the axle (7) of the wheels (8).

7. A sail board carrier according to claim 6, characterized in that portions of the side-members project rearward to serve as stops when the carrier has been swung back.

8. A sail board carrier according to claim 6 or 7, characterized in that the cross-members (15, 16, 17, 18) are U-shaped, each U having a large mouth, the side vertical branches of the U-shaped cross-members being secured under the side-members, the said branches being long enough for receiving the sail board wishbone on the cross-members with the sail board float being set on the side-members.

9. A sail board carrier according to claim 1 or 2, characterized in that it is comprised of a sail board float support member having a front part (1) and a rear part (2), the middle of the rear part being provided with a rear mast stop (3) and being joined to the axle (7) of the wheels (8) by a suspension member (6) thereby forming the rear part of the carrier which is coupled to the front part (1) of the sail board float support member and to the front mast stop (10) by a side-member (9) located on one side of the rear mast stop (3).

10. A sail board carrier according to claim 9, characterized in that two side-members (13) are provided instead of one for coupling the rear part of the carrier with the front mast stop (10) and the front part (1) of the member intended for serving as sail board float support.

11. A device for carrying a sail board, comprising a carrier according to anyone of claims 1-10, characterized in that it also comprises a protecting member (12) for protecting one end of a sail board mast, which allows the use of the sail board mast as a beam by protecting the front end thereof against contact with the ground.

12. A device according to claim 11, characterized in that the protecting member is a removable resilient opening ring-member which protects one end of a sail board mast by its outside surface and which may be clamped about the length of said mast, said ring member being formed by a concave portion (29) symmetrically extended up to two ends (30, 31) which define an open interval (32) having a width smaller than the one of a cross section of a member of the part forming the carrier.

**Patentansprüche**

1. Transportkarre für Surfbretter mit einer Ablage für das Surfbrett und einer Kupplungseinrichtung für eine schnelle Anbringung und Sicherung eines Surfmastes, wobei der Surfmast an der Transportkarre unterhalb des auf der Ablage liegenden Surfbrettes angeordnet und befestigt ist, derart, daß der Mast als Deichsel benutzbar ist, dadurch gekennzeichnet, daß die Einrichtung einen vorderen Anschlag für den Mast und einen hinteren Anschlag für den Mast aufweist, wobei der vordere Anschlag (10, 19) den Mast in Richtung zur Seite und nach oben und der hintere Anschlag (3, 20) den Mast in Richtung zur Seite und nach unten arretiert und jeder Anschlag als rinnenförmige Ausnehmung zur Aufnahme des Querschnitts des Mastes ausgebildet ist.

2. Transportkarre für Surfbretter mit einer Ablage für das Surfbrett und einer Kupplungseinrichtung für eine schnelle Anbringung und Sicherung eines Surfmastes, wobei der Surfmast an der Transportkarre unterhalb des auf der Ablage liegenden Surfbrettes angeordnet und befestigt ist, derart, daß der Mast als Deichsel benutzbar ist, dadurch gekennzeichnet, daß die Einrichtung einen Anschlag für den Mast aufweist, der den Mast in Richtung nach unten (oder nach oben) arretiert und durch eine verlängerte rinnenförmige Ausnehmung in Längsrichtung des Mastes eine derart wirksame seitliche Führung bildet, daß der andere Anschlag den Mast nur in Richtung nach oben (oder nach unten) zu arretieren hat.

3. Transportkarre nach Anspruch 1 oder 2, dadurch gekennzeichnet, daß jede einen Anschlag bildende rinnenförmige Ausnehmung V-förmig ausgebildet ist und dadurch eine punktförmige Einklemmung für den Mast bildet.

4. Transportkarre nach einem der Ansprüche 1-3, dadurch gekennzeichnet, daß, wenn ein Surfmast an der Transportkarre befestigt ist und mit seinem vorderen Ende auf dem Erdboden ruht oder sich in Gebrauchsstellung zum Ziehen der Karre befindet, die Achse der Räder so weit nach hinten angeordnet ist, daß der Mast durch die Schwerkraft zwischen den Anschlägen einklemmbar ist, wobei die Anbringung des Surfbrettes an der Transportkarre die Klemmwirkung erhöht.

5. Transportkarre nach Anspruch 4, dadurch gekennzeichnet, daß die Achse der Räder wesentlich hinter dem hinteren Anschlag für den Mast liegt.

6. Transportkarre nach Anspruch 1 oder 2, dadurch gekennzeichnet, daß sie am vorderen und am hinteren Ende Querstreben (15, 16, 17, 18) aufweist, von denen jede einen Anschlag (19, 20, 21, 22) für den Mast bildet und die über zwei seitliche Träger (14) miteinander verbunden sind, die die Ablage für das Surfbrett bilden, wobei die Anordnung aus den Querstreben und den seitlichen Trägern mit einem mit der Achse (7) der Räder (8) verbundenen Traggestell (23) eine Einheit bildet.

7. Transportkarre nach Anspruch 6, dadurch gekennzeichnet, daß Teile der seitlichen Träger nach hinten überstehen und als Anschläge dienen, wenn die Transportkarre nach hinten geschwenkt wird.

8. Transportkarre nach Anspruch 6 oder 7, dadurch gekennzeichnet, daß die Querstreben (15, 16, 17, 18) U-förmig ausgebildet sind, wobei das U eine weite Öffnung aufweist, die seitlichen, vertikal gerichteten Schenkel der U-förmigen Querstreben am unteren Ende der seitlichen Träger befestigt sind und die Schenkel so lang bemessen sind, daß sie den Gabelbaum auf den Querstreben aufnehmen können, während das Surfbrett auf den seitlichen Trägern abgelegt ist.

9. Transportkarre nach Anspruch 1 oder 2, dadurch gekennzeichnet, daß sie eine Ablage für das Surfbrett mit einem vorderen Teil (1) und einem hinteren Teil (2) aufweist, daß die Mitte des hinteren Teils mit einem hinteren Anschlag (3) für den Mast versehen und über ein Traggestell (6) mit der Achse (7) der Räder (8) verbunden ist und dadurch den hinteren Teil der Transportkarre bildet, der mit dem vorderen Teil (1) der Transportkarre und mit dem vorderen Anschlag (10) für den Mast über eine seitliche Stütze (9) verbunden ist, die an einer Seite des hinteren Anschlages (3) für den Mast angeordnet ist.

10. Transportkarre nach Anspruch 9, dadurch gekennzeichnet, daß an Stelle eines Trägers zwei seitliche Träger (13) vorgesehen sind, die den hinteren Teil der Transportkarre mit dem vorderen Anschlag (10) für den Mast und mit der Vorderseite (1) des Teiles verbinden, das als Ablage für das Surfbrett dient.

11. Einrichtung zum Tragen eines Surfbrettes mit einer Transportkarre nach einem der Ansprüche 1-10, dadurch gekennzeichnet, daß sie zusätzlich ein Schutzteil (12) zum Schutz eines Endes des Surfmastes aufweist, das die Benutzung des Surfmastes als Deichsel ermöglicht, indem es das vordere Ende des Mastes gegen Berührung mit dem Erdboden schützt.

12. Einrichtung nach Anspruch 11, dadurch gekennzeichnet, daß das Schutzteil ein entfernbares, nachgiebiges Teil in Form offenen Ringes ist, das durch seine äußere Oberfläche ein Ende des Surfmastes schützt und das entlang der Länge des Mastes an dem Mast festklemmbar ist, daß das ringförmige Teil ein konkaves Teil (29) mit zwei symmetrisch nach oben gerichteten Enden (30, 31) aufweist, die eine Öffnung (32) bilden, deren Weite kleiner ist als der Querschnitt eines Elementes des die Transportkarre bildenden Teiles.

FIG.1

FIG.2

FIG.3

FIG.4

2

**FIG.5**

0 102 856

FIG.6

33

30

32

31

29

FIG. 7

35

34